# NEUE EUROPÄISCHE PATENTSCHRIFT

(11) **EP 3 384 776 B2**
(45) Veröffentlichungstag und Bekanntmachung des Hinweises auf die Entscheidung über den Einspruch: **22.02.2023**
(45) Hinweis auf die Patenterteilung: 18.03.2020
(21) Anmeldenummer: 17165563.2
(22) Anmeldetag: 07.04.2017
(51) Int. Cl.: A21C 11/00

(54) **VORRICHTUNG ZUM FORMEN VON TEIGSTÜCKEN ZU TEIGPRODUKTEN**
DEVICE FOR FORMING PIECES OF DOUGH TO FORM DOUGH PRODUCTS
DISPOSITIF DESTINÉ À TRANSFORMER DES PÂTONS EN PRODUITS DE PÂTE

(43) Veröffentlichungstag der Anmeldung: 10.10.2018
(73) Patentinhaber: Rondo Burgdorf AG, 3400 Burgdorf (CH)
(72) Erfinder: Brechbühl, René, 3400 Burgdorf (CH); Wenkel, Edgar, 3414 Oberburg (CH); Besson, Marc, 3400 Burgdorf (CH)
(74) Vertreter: Keller Schneider Patent- und Markenanwälte AG

(56) Entgegenhaltungen:
- EP-A1- 1 817 959
- EP-A1- 2 716 159
- EP-B1- 1 306 009
- DE-A1- 10 009 300
- DE-C1- 3 821 045
- DE-U1- 8 617 478
- US-A1- 2012 114 812

## Beschreibung

### Technisches Gebiet

Die Erfindung betrifft eine Vorrichtung zum mehrdimensionalen Formen mindestens eines Teigstücks zu mindestens einem Teigprodukt mit einem Werkzeug, welches über mindestens eine Kammer verfügt.

### Stand der Technik

Die DE 86 17 478 U1 (Winkler AG) offenbart eine Vorrichtung zum Pressen, Teilen und Wirken von Teigstücken. Die Teigstücke ruhen auf einem intermittierend oder kontinuierlich angetriebenen Wirkband. Ein Bearbeitungskopf weist einen rechteckigen Teigumfassungsring auf, welcher über eine vertikal verschiebbar gelagerte Pressplatte verfügt. Durch ein Absenken des Bearbeitungskopfs auf ein Teigstück kann dieses auf eine bestimmte Dicke gepresst werden, wobei anschliessend Teilmesser aus dem Bearbeitungskopf ausfahren, um das Teigstück in kubische Teigstücke zu teilen. Anschliessend wird die Pressplatte leicht angehoben, wodurch zwischen der Oberfläche einer Wirkunterlage, den Teilmessern sowie der Pressplatte eine Reihe von Wirkkammern gebildet wird. Zum Wirken wird nun der gesamte Bearbeitungskopf in eine kreisende Schwingbewegung parallel zur Oberfläche des Wirkbandes versetzt, wodurch die Teilteigstücke im Zusammenwirken mit Wirkvertiefungen auf der Oberfläche der Wirkunterlage rundgewirkt werden.

Die DE 38 21 045 C1 (Werner & Pfleidrer GmbH) offenbart eine Maschine zum Rundwirken von Teigstücken. Konzentrisch um eine Wirktrommel ist eine Kammertrommel angeordnet. Diese Kammertrommel weist über ihren gesamten Umfang durch Trennwände voneinander getrennte sowie zur Wirktrommel und nach aussen offene Kammern auf. Der Drehbewegung der Wirktrommel ist eine hin- und hergehende Dreh- bzw. Schwenkbewegung um eine Achse der Wirktrommel und der Kammertrommel überlagert mit einer hin- und hergehenden Bewegung in Richtung der Drehachse. Ein Wirkband ist derart um die Kammertrommeln geführt, dass dieses sich - bezogen auf die Drehrichtung - hinter einer Aufgabestelle für ein Teigstück an die äussere Oberfläche der Kammertrommel legt und diese in einem Umschlingungsbereich bis zu einer unteren, der Aufgabestelle etwa diametral gegenüberliegenden Abgabestelle für die Teigstücke umschlingt. Die Teigstücke werden in den Kammern durch die axiale und tangentiale Relativbewegung der Wirktrommel und der Kammertrommel gegeneinander gewirkt, wobei sie sich im Umschlingungsbereich gegen das Wirkband abstützen. Mit zunehmendem Transport in Drehrichtung in Richtung auf die Abgabestelle mit fortschreitendem Wirkvorgang nehmen die Teigstücke zunehmend eine kugelige Form an.

Die DE 31 136 21 A1 (Morinaga) beschreibt ein Verfahren zum Formen eines viskosen und elastischen Nahrungsmittelmaterials zu einer Kugelform. Beim Nahrungsmittelmaterial kann es sich um ein pastenförmiges Nahrungsmittelmaterial aus verarbeitetem Reis bzw. verarbeiteten Kartoffeln oder um Teig, der aus gemahlenem Korn hergestellt ist, wie beispielsweise Brotteig, handeln. Eine Einrichtung zur Durchführung des Verfahrens umfasst ein Nahrungsmittelmaterial förderndes Bett in Form eines endlosen Bandes, eine Einrichtung zum Aufbringen einer klebhindernden Flüssigkeit, einer Zuführungseinrichtung zum Zuführen einer vorbestimmten Menge an Nahrungsmittelmaterialteilen und ein Bett, das exzentrisch in einer Ebene rotiert, die nahezu parallel zu dem das Nahrungsmittelmaterial fördernde Bett angeordnet ist. Das Bett und das exzentrisch rotierende Bett sind etwas geneigt zueinander vorgesehen, so das dadurch ein zunehmend grösserer Zwischenraum für die Nahrungsmittelmaterialteile entsteht, wenn die Nahrungsmittelmaterialteile weiterlaufend gefördert werden, so dass der auf sie ausgeübte Druck allmählich vermindert wird. Durch die Relativbewegungen des fördernden Betts und des exzentrisch rotierenden Betts wird das Nahrungsmittelmaterial zu einer Kugel geformt.

### Darstellung der Erfindung

Aufgabe der Erfindung ist es, eine dem eingangs genannten technischen Gebiet zugehörende Vorrichtung zu schaffen, welche das Formen mindestens eines Teigstücks zu mindestens einem Teigprodukt mit einer hohen Effizienz ermöglicht, wobei die Vorrichtung möglichst flexibel zur Herstellung einer Vielzahl an unterschiedlichen Formen von Teigprodukten geeignet ist und einen möglichst einfachen Aufbau aufweist.

Die Lösung der Aufgabe ist durch die Merkmale des Anspruchs 1 definiert. Gemäss der Erfindung umfasst die Vorrichtung zum Formen mindestens eines Teigstücks zu mindestens einem Teigprodukt eine Unterlage zur Aufnahme des mindestens einen Teigstücks sowie ein Werkzeug mit mindestens einer Kammer, wobei die Kammer oder jede der Kammern einer umlaufenden Wandung aufweist. Die Wandung(en) definieren pro Kammer auf einer ersten Seite des Werkzeugs, welche in Richtung der Unterlage gerichtet ist, je eine Öffnung zur Aufnahme eines Teigstücks in die Kammer(n). Die Vorrichtung umfasst ferner erste Antriebsmittel, mit denen das Werkzeug in mindestens zwei Raumrichtungen bewegt oder wenigstens in eine Raumrichtung bewegt sowie um eine Drehachse gedreht wird, so dass das mindestens eine Teigstück durch Bewegungen oder durch Drehung des Werkzeugs relativ zur Unterlage zu mindestens einem Teigprodukt geformt wird. Innerhalb jeder Kammer ist ein Stempel angeordnet, welcher über Vorspannmittel und Stellmittel verfügt, um eine definierte Kraft auf ein in der Kammer aufgenommenes Teigstück auszuüben.

Mittels der Vorspannmittel und der Stellmittel kann sichergestellt werden, dass das mindestens eine Teigstück immer mit einer optimalen Kraft auf die Unterlage gedrückt wird, so dass das mindestens eine Teigstück immer in genügendem Masse mit der Unterlage in Kontakt steht, was die Effizienz des Formprozesses erhöht. Ferner kann bei einer Zunahme des Volumens oder der Höhe des mindestens einen Teigstücks im Formprozess die Position des Stempels innerhalb der Kammer angepasst werden. Durch die Stellmittel kann zusätzlich die Kraft variiert werden, so dass zusätzlich zu den Relativbewegungen zwischen Werkzeug und Unterlage eine Bewegung innerhalb der Kammer genutzt werden kann, um ein innerhalb der Kammer befindliches Teigstück zu formen.

In der vorliegenden Anmeldung wird unter "Teigstück" ein in eine bestimmte Form zugeschnittenes und kalibriertes, d.h. auf eine bestimmte Dicke gewalztes Stück eines rohen Teigs verstanden. Das Stück Teig kann dabei insbesondere in der Form eines Quadrats, Rechtecks, Dreiecks, Kreises, Ellipse, Polygons oder sonst einer geeigneten Form vorliegen.

Als "Teigprodukt" wird in der vorliegenden Anmeldung ein zu einer dreidimensionalen Form verarbeitetes Teigstück verstanden, insbesondere ein Teigling. Mit der vorliegenden Vorrichtung lassen sich Teigstücke zum Herstellen von kugelförmigen Brötchen oder Gebäckstücken, stangenförmigen Broten (Baguettes) oder Brotlaiben herstellen. Je nach Ausgestaltung des Werkzeugs und dessen Bewegung relativ zur Unterlage lassen sich jedoch auch andere Formen von Teigprodukten herstellen.

Als "Teig" wird in der vorliegenden Anmeldung sowohl eine Mischung aus wenigstens einem Mehl mit mindestens einer Flüssigkeit, wie z.B. Brotteig, Kuchenteig, Mürbeteig oder Blätterteig, wie auch teigartige Massen, wie zum Beispiel Marzipan oder Nussmassen verstanden.

Die Unterlage ist vorzugsweise als starre Platte ausgeführt, welche insbesondere relativ zum Boden, auf welchem sie steht, unbeweglich ausgebildet ist. Dadurch wird die Effizienz der Formgebung erhöht, da sie somit den Bewegungen des Werkzeugs nicht folgen wird. Die Unterlage ist vorzugsweise als starrer Tisch ausgestattet.

Die Teigstücke können direkt auf einer Auflagefläche der Unterlage aufliegen. Vorzugsweise ist auf der Unterlage jedoch ein Fördermittel angeordnet, um das mindestens eine Teigstück und das mittels der Vorrichtung geformte mindestens eine Teigprodukt automatisch auf die Unterlage und von dieser weg befördern zu können.

Das Werkzeug verfügt vorzugsweise über einen Grundkörper, insbesondere in der Form einer Platte oder dergleichen, auf dem die mindestens eine Kammer auf einer ersten Seite angeordnet ist. Auf einer der ersten Seite gegenüberliegende, zweite Seite kann das Werkzeug über Befestigungsmittel verfügen, mit welchen das Werkzeug lösbar mit der Vorrichtung befestigt ist. Dadurch kann die erfindungsgemässe Vorrichtung mit Werkzeugen, die eine unterschiedliche Anzahl an Kammern oder unterschiedlich geformte Kammern aufweisen, eingesetzt werden, was die Flexibilität beim Formen von unterschiedlichen Teigprodukten erhöht.

Sofern mehrere Kammern vorhanden sind, sind diese in einem vorbestimmten Muster auf dem Werkzeug angeordnet. Vorzugsweise bilden die Kammern ein Gittermuster auf dem Werkzeug. Dadurch lässt sich die Fläche des Werkzeugs optimal ausnutzen. In diesem Fall verfügt die Vorrichtung über Mittel, mit denen sich die Teigstücke entsprechend der Anordnung der Kammern auf dem Werkzeug auf der Unterlage oder einem auf der Unterlage angeordneten Fördermittel anordnen oder ablegen lassen. Dadurch wird sichergestellt, dass beim Formen in jeder Kammer ein Teigstück aufgenommen wird.

Die mindestens eine Kammer weist eine umlaufende Wandung auf. Bei Vorhandensein mehrerer Kammern verfügt vorzugsweise jede Kammer über eine eigene, umlaufende Wandung. Benachbarte Kammern können jedoch auch abschnittweise über eine gemeinsame Wandung verfügen.

Die Wandung der mindestens einen Kammer ist vorzugsweise einstückig ausgebildet. Alternativ kann die Wandung jedoch auch aus einzelnen Wandsegmenten bestehen, welche aneinander grenzen und/oder welche miteinander verbunden sind.

Die Wandung der mindestens einen Kammer steht vorzugsweise auf der ersten Seite des Grundkörpers des Werkzeugs von diesem ab, wobei die Wandung vorzugsweise im rechten Winkel zur ersten Seite des Werkzeugs steht. Die Wandung kann jedoch bei bestimmten Ausführungsformen auch in einem Winkel zur ersten Seite stehen. Vorzugsweise weist die Wandung - und damit auch die mindestens eine Kammer - eine grössere Höhe auf als das mindestens eine Teigprodukt, welches mit dem Werkzeug geformt werden soll.

Alternativ kann die mindestens eine Kammer auf der ersten Seite in den Grundkörper des Werkzeugs eingelassen sein. In diesem Fall bildet die mindestens eine Kammer eine Ausnehmung innerhalb des Grundkörpers. Bei dieser Konfiguration kann die mindestens eine Kammer beispielsweise aus dem Grundkörper ausgefräst sein.

Die mindestens eine Kammer - und damit auch die Wandung(en) - weist vorzugsweise einen rechteckigen, quadratischen, dreieckigen, runden, ovalen oder polygonalen Querschnitt in einer Ebene auf, die parallel zur ersten Seite des Grundkörpers steht.

Der Grundkörper des Werkzeugs wie auch die Wandung der mindestens einen Kammer ist vorzugsweise aus Stahl, insbesondere Edelstahl gefertigt, was die Reinigung erleichtert. Alternativ können auch andere Materialien, insbesondere Polymere verwendet werden, welche für die Lebensmittelverarbeitung zugelassen sind.

Die mindestens eine Kammer ist in Richtung der ersten Seite des Werkzeugs, welche beim bestimmungsmässigen Gebrauch der Vorrichtung gegen die Unterlage gerichtet ist, offen. Das heisst, die Wandung der mindestens einen Kammer definiert auf der ersten Seite eine Öffnung der mindestens einen Kammer, durch welche ein Teigstück in die Kammer aufgenommen werden kann, um diese innerhalb der Kammer zu formen.

Mit den ersten Antriebsmitteln lässt sich das Werkzeug vorzugsweise auf die Unterlage beziehungsweise einem auf der Unterlage befindlichen Fördermittel absenken und von dieser wieder abheben. Dadurch können Teigstücke, die auf der Unterlage oder dem Fördermittel angeordnet sind, durch die Öffnung in die mindestens eine Kammer aufgenommen werden, beziehungsweise nach dem Formprozess ein Teigprodukt aus der mindestens einen Kammer freigegeben werden.

Über die ersten Antriebsmittel lässt sich das Werkzeug in eine Raumrichtung oder um eine Drehachse relativ zur Unterlage bewegen beziehungsweise drehen. Durch diese Bewegung oder Drehung relativ zur Unterlage wird ein in der mindestens einen Kammer befindliches Teigstück durch die Wandung erfasst und auf der Unterlage oder einem darauf befindlichen Fördermittel gewirkt. Dadurch kann mit Hilfe der Bewegung oder Drehung des Werkzeugs relativ zur Unterlage ein im Wesentlichen flaches Teigstück zu einem Teigprodukt mit einer dreidimensionalen Form geformt werden. Dieser Prozess wird in der folgenden Anmeldung als "Formprozess" bezeichnet.

Die Vorrichtung verfügt vorzugsweise über eine Steuerung, mit welcher zumindest die ersten Antriebsmittel angesteuert werden können. Über die Steuerung lassen sich vorzugsweise für unterschiedliche herzustellende Teigprodukte spezifische Bewegungen des Werkzeugs festlegen und speichern.

Mit dem innerhalb der mindestens einen Kammer angeordnete Stempel kann das mindestens eine Teigstück mit einer definierten Kraft gegen die Unterlage oder einem darauf befindlichen Fördermittel gedrückt werden, so dass das mindestens eine Teigstück stets mit der Unterlage beziehungsweise dem darauf befindlichen Fördermittel in Kontakt ist. Der Stempel ist daher innerhalb der mindestens einen Kammer linear bewegbar gelagert. Dadurch wird verhindert, dass das mindestens eine Teigstück abgehoben wird oder an der Wandung kleben bleibt. Dies würde dazu führen, dass das mindestens eine Teigstück gar nicht oder zumindest nicht im gewünschten Masse geformt wird. Das Vorsehen des Stempels erhöht somit die Effizienz der Vorrichtung beim Formen des mindestens einen Teigprodukts.

Der Stempel ist vorzugsweise als Platte ausgeführt, welche den gesamten Querschnitt der Kammer in einer Ebene, die parallel zur ersten Seite des Grundkörpers steht, einnimmt. Vorzugsweise ist der Stempel durch mindestens eine Führungsstange linear geführt, wobei die Stange fix mit dem Stempel verbunden ist und innerhalb einer Führungsöffnung oder Führungsnut des Grundkörpers beweglich gelagert ist. In einer bevorzugten Ausführungsform ist der Stempel durch zwei Führungsstangen geführt. Der Stempel ist auf derjenigen Seite, welche beim bestimmungsgemässen Gebrauch mit dem mindestens einen Teigstück in Berührung kommt vorzugsweise flach ausgebildet. In weiteren, bevorzugten Ausführungsformen kann der Stempel jedoch auch eine konkave oder konvexe Wölbung aufweisen, welche beim bestimmungsgemässen Gebrauch mit dem mindestens einen Teigstück in Berührung kommt. Alternativ kann der Stempel jedoch auch ein Wellen- oder Zackenmuster aufweisen, welches beim bestimmungsgemässen Gebrauch mit dem mindestens einen Teigstück in Berührung kommt.

Über ein Vorspannmittel kann passiv eine definierte Kraft durch den Stempel auf das mindestens eine Teigstück ausgeübt werden. Bei zunehmendem Volumen beziehungsweise zunehmender Höhe des mindestens einen Teigstücks infolge des Formprozesses wird der Stempel passiv durch das mindestens eine Teigstück in eine Richtung gedrückt, welche von der Unterlage weg gerichtet ist. Durch die auf das mindestens eine Teigstück ausgeübte Kraft kann auf eine einfache Weise stets ein optimaler Kontakt des mindestens einen Teigstücks mit der Unterlage beziehungsweise dem darauf befindlichen Fördermittel erzielt werden.

Als Vorspannmittel wird eine Feder, insbesondere eine Schraubenfeder eingesetzt. Dabei kann es sich um eine Zug- oder eine Druckfeder handeln, je nachdem ob die Feder ausserhalb oder innerhalb der Kammer angeordnet ist. Vorzugsweise ist die Feder zwischen dem Stempel und einer die Kammer gegenüber dem Grundkörper des Werkzeugs abtrennende Wand angeordnet, wobei die Feder in diesem Fall als Druckfeder ausgestaltet ist. Bei Verwendung einer Schraubenfeder kann diese vorzugsweise um die mindestens eine Führungsstange herum angeordnet sein. Alternativ können auch andere Federarten eingesetzt werden, wie beispielsweise Membranfedern, Wellenfedern oder federnde Wabenkonstruktionen, welche z.B. mittels 3D-Druck hergestellt werden. Ferner kann als Vorspannmittel auch ein elastisches Element, wie beispielsweise eine Gummifeder oder dergleichen eingesetzt werden. Ferner kann als Vorspannmittel auch eine Luftfeder oder eine Gasdruckfeder verwendet werden.

Durch Stellmittel kann die durch den Stempel auf das mindestens eine Teigstück ausgeübte Kraft gezielt beeinflusst werden, beispielsweise geregelt durch die Steuerung oder einen Regelkreis. Dabei kann die Krafteinwirkung gezielt verändert werden, um die Formgebung zu beeinflussen. Bei einem in Folge des Formens höher werdenden Teigstück beziehungsweise bei einer Volumenzunahme des Teigstücks kann mittels des Stellmittels der für das Teigstück innerhalb der mindestens einen Kammer zur Verfügung stehende Platz vergrössert werden. Dadurch können Höhen- oder Volumenänderungen aktiv kompensiert werden.

Als Stellmittel werden ein Pneumatikzylinder, ein Hydraulikzylinder oder ein Linearmotor eingesetzt.

In der Erfindung ist eine Kombination von Vorspannmittel und Stellmittel eingesetzt.

Die ersten Antriebsmittel sind vorzugsweise derart ausgestaltet, dass diese ein Absenken und Abheben des Werkzeugs von der Unterlage sowie eine Bewegung des Werkzeugs in mindestens eine Raumrichtung, welche parallel zu einer Auflagefläche der Unterlage liegt, ermöglichen.

Dadurch, dass das Werkzeug in einer Raumrichtung, welche parallel zu einer Auflagefläche der Unterlage liegt, bewegt wird, wird sichergestellt, dass das Werkzeug in einem konstanten Abstand zur Auflagefläche bewegt wird. Dadurch wirken auch die Kräfte, die durch die Wandungen sowie durch die Stempel auf das mindestens eine Teigstück einwirken, gleichmässig.

Vorzugsweise wird das Werkzeug derart auf die Auflagefläche abgesenkt, dass die Wandung der mindestens einen Kammer auf dieser aufliegen beziehungsweise mit einem möglichst kleinen Abstand von dieser beabstandet ist. Dadurch kann sichergestellt werden, dass das mindestens eine Teigstück nicht zwischen der Auflagefläche sowie der Wandung eingeklemmt wird.

Durch das Anheben und Absenken des Werkzeuges kann das mindestens eine Teigstück auch in vertikaler Richtung gezielt geformt werden, so dass sich mit der erfindungsgemässen Vorrichtung flexibel eine Vielzahl an Formen für das mindestens eine Teigprodukt erzielen lässt.

In einer Ausführungsform kann vorgesehen sein, dass die Wandung der mindestens einen Kammer linear beweglich am Grundkörper des Werkzeugs angeordnet ist, wobei diese durch eine Vorspannkraft in einer Richtung, welche vom Grundkörper weg und somit beim bestimmungsmässigen Gebrauch zur Auflagefläche der Unterlage hin vorgespannt ist. Dadurch kann sichergestellt werden, dass die Wandung stets auf der Auflagefläche der Unterlage aufliegt. Dies erlaubt eine Kompensation eines allfälligen Niveauunterschiedes.

In einer weiteren Ausführungsform kann eine die Wandung umlaufend umspannende Zusatzwandung vorgesehen sein, welche entweder innerhalb oder ausserhalb der mindestens einen Kammer und relativ zu der Wandung verschiebbar angeordnet ist, wobei die Zusatzwandung über Vorspannmittel vom Grundkörper weg vorgespannt ist. Dadurch lassen sich allfällige Lücken zwischen Wandung und Auflagefläche durch die Zusatzwandung schliessen.

Bevorzugt ist auf der Unterlage ein Förderband angeordnet, auf dem das mindestens eine Teigstück in eine Förderrichtung bewegt wird, wobei die Vorrichtung über zweite Antriebsmittel verfügt, mit denen das Werkzeug in Förderrichtung und entgegen der Förderrichtung bewegt wird.

Das Förderband wird vorzugsweise durch dritte Antriebsmittel in der Förderrichtung mit einer ersten vorbestimmten Geschwindigkeit angetrieben. Die zweiten Antriebsmittel werden vorzugsweise durch eine Steuereinrichtung derart angesteuert, dass das Werkzeug in Förderrichtung mit einer zweiten vorbestimmten Geschwindigkeit angetrieben wird, die der ersten vorbestimmten Geschwindigkeit entspricht. Dadurch können mittels der Vorrichtung kontinuierlich hintereinander auf dem Förderband angeordnete Teigstücke geformt werden, ohne dass das Förderband - und allfällige vorgelagerte Bearbeitungsvorrichtungen für den Teig, wie z.B. Kalibrierer - angehalten werden müssen.

Alternativ kann die zweite vorbestimmte Geschwindigkeit auch höher oder tiefer sein, als die erste vorbestimmte Geschwindigkeit, so dass die Teigstücke zusätzlich auf der Unterlage oder einem darauf befindlichen Fördermittel gerollt werden. In einer weiteren Ausführungsform kann die zweite vorbestimmte Geschwindigkeit auch in periodischen Intervallen geändert werden, so dass die Teigstücke auf der Unterlage oder einem darauf befindlichen Fördermittel einer Art Ausrollbewegung ausgesetzt werden. Vorzugsweise wird die zweite vorbestimmte Geschwindigkeit periodisch von einem ersten Wert, der kleiner ist als die erste vorbestimmte Geschwindigkeit, auf einen zweiten Wert, der grösser ist als die erste vorbestimmte Geschwindigkeit, und wieder zurück geändert, wobei die durchschnittliche Geschwindigkeit des Förderbandes vorzugsweise der ersten vorbestimmten Geschwindigkeit entspricht.

Die Bewegung des Werkzeugs entgegen der Förderrichtung erfolgt vorzugsweise mit einer dritten vorbestimmten Geschwindigkeit, welche höher ist als die erste und/oder die zweite vorbestimmte Geschwindigkeit.

Als Bewegungsablauf wird demnach zuerst das Werkzeug auf das Förderband, welches auf der Ablagefläche der Unterlage beweglich gelagert ist, abgesenkt, wobei das Werkzeug bereits mit der der ersten vorbestimmten Geschwindigkeit entsprechenden zweiten vorbestimmten Geschwindigkeit in Förderrichtung bewegt wird. Anschiessend startet die Bewegung des Werkzeugs in mindestens einer Raumrichtung oder dessen Drehung relativ zur Unterlage, wobei das Werkzeug gleichzeitig immer noch mit der zweiten vorbestimmten Geschwindigkeit in Förderrichtung bewegt wird. So lässt sich das mindestens eine Teigstück zum mindestens einen Teigprodukt formen, während dieses auf dem Förderband mit der ersten vorbestimmten Geschwindigkeit in Förderrichtung bewegt wird. Nach Abschluss des Formvorganges wird das Werkzeug vom Förderband abgehoben und anschliessend mit der dritten vorbestimmten Geschwindigkeit entgegen der Förderrichtung bewegt, so dass der Bewegungszyklus wieder von vorne beginnen kann.

Die zweiten Antriebsmittel sowie die dritten Antriebsmittel werden vorzugsweise durch dieselbe Steuerung angesteuert, wie die ersten Antriebsmittel. Über die Steuerung lässt sich die erste, zweite und/oder dritte vorbestimmte Geschwindigkeit je nach dem herzustellenden Teigprodukt einstellen und speichern. Auch lässt sich die Bewegung des Werkzeugs entgegen der Förderrichtung, insbesondere die durch das Werkzeug zurückgelegte Strecke entgegen der Förderrichtung einstellen und speichern.

Vorzugsweise verfügt das Förderband auf einer Unterseite über mindestens eine Führungsleiste oder über mindestens einen Führungskeil, welche(r) in mindestens einer Nut läuft, die in einer Auflagefläche der Unterlage eingebracht ist.

Die mindestens eine Führungsleiste beziehungsweise der mindestens eine Führungskeil erstreckt sich parallel zu einer Richtung, welche bei der bestimmungsgemässen Verwendung des Förderbandes parallel zur Förderrichtung steht. Dadurch können Relativbewegungen des Förderbandes relativ zur Auflagefläche in andere Richtungen als der Förderrichtung unterbunden werden. Dadurch wird gewährleistet, dass das Förderband z.B. durch die Bewegungen des Werkzeugs nicht seitlich auf der Auflagefläche verrutscht. Dies erhöht die Effizienz des Formvorgangs durch die erfindungsgemässe Vorrichtung.

Um die Biegefähigkeit des Förderbandes nicht zu beeinträchtigen, verfügen die Führungsleisten oder Führungskeile über eine Mehrzahl an Ausnehmungen oder Lücken, welche eine Biegung des Förderbandes in eine Richtung, welche rechtwinklig zum Verlauf der Führungsleisten oder Führungskeile - und damit auch rechtwinklig zur Förderrichtung - liegt, ermöglichen.

Bevorzugt weist das Förderband eine Noppenstruktur auf. Durch die Noppenstruktur kann sichergestellt werden, dass durch die daraus resultierende Erhöhung der Reibung zwischen Förderband und dem mindestens einen Teigstück dieses durch das Werkzeug nicht bloss auf dem Förderband herumgeschoben wird, sondern durch die Relativbewegungen des Werkzeugs zum Förderband geformt wird. Falls kein Förderband auf der Unterlage angeordnet ist, verfügt die Auflagefläche der Unterlage vorzugsweise über eine Noppenstruktur. Alternativ können auch andere Strukturen verwendet werden, welche die Reibung zwischen Förderband beziehungsweise Auflagefläche und Teigstück erhöhen, wie z.B. eine Rippenstruktur oder dergleichen.

Die ersten Antriebsmittel und/oder die zweiten Antriebsmittel sind vorzugsweise als Industrieroboter ausgeführt.

In der vorliegenden Anmeldung wird als "Industrieroboter" ein Manipulator verstanden, der über mehrere Freiheitsgrade respektive über mehrere Bewegungsachsen verfügt. Vorzugsweise wird als Industrieroboter ein Delta-Roboter, Portalroboter oder ein Gelenkarmroboter eingesetzt.

Die Verwendung eines Industrieroboters verleiht den ersten und/oder zweiten Antriebsmitteln eine hohe Dynamik und Präzision. Zudem ist am Markt eine breite Palette an unterschiedlichen Industrierobotern erhältlich, so dass bei der Produktion der Vorrichtung auf bestehende Lösungen in der Industrierobotik zurückgegriffen werden kann, was die Herstellungskosten und die Herstellungszeit für eine derartige Vorrichtung verringert.

Der Industrieroboter dient vorzugswiese sowohl als erste Antriebsmittel wie auch als zweite Antriebsmittel. Dadurch lassen sich beide Antriebsmittel durch eine einzige Einheit realisieren, was die Komplexität und somit die Kosten der Vorrichtung verringert.

Vorzugsweise ist der Industrieroboter auf einem Schlitten angeordnet, der in mindestens einer Raumrichtung, welche insbesondere parallel zur Förderrichtung liegt, linear bewegbar ist. Dadurch lässt sich der Aktionsradius des Industrieroboters, das heisst der Raum, in welchem der Industrieroboter das Werkzeug positionieren kann, vergrössern.

Da Industrieroboter sehr flexibel und präzise sind und unterschiedliche Bewegungen und Bewegungsabläufe ermöglichen, ist deren Verwendung beim Formen mindestens eines Teigstücks zu mindestens einem Teigprodukt vorteilhaft. Ferner lassen sich damit Teigprodukte besonders effizient und flexibel bearbeiten.

Vorzugsweise wird als Industrieroboter ein Gelenkarmroboter eingesetzt. Ein Gelenkarmroboter verfügt über einen Arm, der mehrere Abschnitte aufweist, welche über Drehachsen miteinander verbunden sind. Ein Gelenkarmroboter verfügt an der Spitze des Armes über einen Greifer oder über eine Kopplungsvorrichtung, mit welcher ein Werkzeug oder ein Effektor am Gelenkroboterarm befestigt werden kann.

Gelenkarmroboter verfügen über variierende Anzahlen an Achsen. Vorzugsweise verfügt der Gelenkarmroboter bei der erfindungsgemässen Vorrichtung über mindestens 3 Achsen. Besonders bevorzugt verfügt der Gelenkarmroboter jedoch über mehr als 3 Achsen, insbesondere über 4, 5 oder 6 Achsen.

Je mehr Achsen ein Gelenkarmroboter aufweist, umso komplexere Bewegungen und Bewegungsabläufe lassen sich durch diesen ausführen.

Vorzugsweise weist die Vorrichtung eine Steuerung auf, mit welcher die durch den Stempel auf ein in der mindestens einen Kammer aufgenommenes Teigstück ausgeübte Kraft durch Ansteuerung der Stellmittel veränderbar ist.

Vorzugsweise ist die Steuerung derart ausgestaltet, dass während des Formgebungsprozesses die auf das in der Kammer befindliche Teigstück ausgeübte Kraft kontinuierlich verändert wird, beispielsweise abnimmt. Alternativ kann die ausgeübte Kraft auch nach einer vorbestimmten Zeit auf einen bestimmten Wert erhöht oder verkleinert werden. Je nach Anwendung kann die Kraft auch periodisch erhöht und verkleinert werden, so dass das Teigstück zusätzlich zur Bewegung des Werkzeugs relativ zur Unterlage auch innerhalb der Kammer formgebenden Kräften ausgesetzt ist. Dadurch lässt sich das mindestens eine Teigstück in allen drei Raumrichtungen formen.

Die Steuerung ist vorzugsweise dieselbe Steuerung, mit welcher die ersten Antriebsmittel sowie allenfalls die zweiten und die dritten Antriebsmittel angesteuert werden. Alternativ kann jedoch zur Ansteuerung der Stellmittel eine zusätzliche Steuerung vorgesehen sein.

Sofern das Werkzeug über mehrere Kammern sowie über mehrere Stellmittel verfügt oder für jeden Stempel ein separates Stellmittel vorhanden ist, kann die Steuerung derart ausgebildet sein, dass sich die Stellmittel einzeln ansteuern lassen. Dadurch kann gezielt für jedes in einer Kammer befindliches Teigstück individuell oder für eine Teilmenge dieser Teigstücke gemeinsam die Kraft verändert werden. Alternativ kann die Steuerung jedoch auch derart ausgebildet sein, dass alle Stellmittel gleichzeitig angesteuert werden.

Ferner kann ein Stempel mit Stellmittel dazu benutzt werden, das mindestens eine Teigprodukt aus der mindestens einen Kammer auszustossen, wenn der Formprozess abgeschlossen ist.

Vorzugsweise verfügt die Vorrichtung über mindestens einen Sensor, insbesondere über wenigstens eine Kamera, mit welchem das mindestens eine Teigstück oder das mindestens eine Teigprodukt nach dem Formprozess erfasst werden kann. Durch den Sensor kann beispielsweise die Istlage des mindestens einen Teigstücks erfasst werden, so dass das Werkzeug anschliessend so positioniert werden kann, dass das mindestens eine Teigstück in die mindestens eine Kammer aufgenommen wird. Nach dem Formprozess kann die Form des mindestens einen Teigstücks mit dem Sensor erfasst werden und bei Abweichung von einer Sollform gegebenenfalls durch die Steuerung erneut ein Formprozess gestartet werden, um die Form des Teigstücks zu korrigieren.

Bevorzugt verfügt die Vorrichtung über mindestens einen Regelkreis, mit welchem mittels des Stempels auf ein in der mindestens einen Kammer aufgenommenes Teigstück durch Ansteuerung der Stellmittel eine konstante, vorgegebene Kraft ausgeübt werden kann.

So kann sichergestellt werden, dass auch bei einer Höhen- oder Volumenzunahme des mindestens einen Teigstücks dieses stets einer konstanten Kraft ausgesetzt ist. Der Regelkreis misst dabei die auf das mindestens eine Teigstück ausgeübte Kraft und regelt das entsprechende Stellmittel so, dass die auf dieses Teigstück ausgeübte Kraft einen konstanten Wert aufweist oder in einem definierten Wertebereich verbleibt. Vorzugsweise wird bei mehreren Kammern für jede Kammer ein separater Regelkreis bereitgestellt, so dass sichergestellt werden kann, dass die in den Kammern befindlichen Teigstücke trotz unterschiedlicher Höhen- oder Volumenzunahme einer optimalen Krafteinwirkung ausgesetzt sind.

Der Stempel der mindestens einen Kammer verfügt über ein Federelement, welches eine Vorspannkraft auf den Stempel ausübt, sowie über Stellmittel, wobei mit den Stellmittel die Vorspannkraft des Federelements auf den Stempel veränderbar ist.

Durch die Stellmittel wird eine Anschlagsfläche des Federelements verstellt, wodurch dieses bei gleichbleibender Position des Stempels zusammengedrückt oder entspannt wird. Dadurch lässt sich die Vorspannkraft, die auf den Stempel wirkt, variieren. Der Stempel wird beispielsweise während des Formprozesses infolge der zunehmenden Höhe oder des zunehmenden Volumens des Teigstücks von diesem von der Unterlage weg gestossen, so dass das Federelement komprimiert wird. Dadurch erhöht sich die auf den Stempel wirkende Kraft, die durch das Federelement ausgeübt wird. Bevor diese Kraft zu gross wird und damit negative Auswirkungen auf den Formprozess hat, kann mittels der Stellmittel das Federelement wieder teilweise entspannt werden.

Vorzugsweise ist das Federelement an einem ersten Ende auf eine Halterungsplatte, welche auf der zweiten Seite des Grundkörpers angeordnet ist, befestigt. Diese Halterungsplatte ist derart auf dem Grundkörper gelagert, dass sich ein Abstand zwischen der Halterungsplatte und dem Grundkörper vergrössern beziehungsweise verkleinern lässt. Das Federelement ist an einem zweiten Ende mit dem Stempel verbunden oder stützt sich auf diesem ab. Durch eine Änderung des Abstandes zwischen der Halterungsplatte und dem Grundkörper lässt sich das Federelement entspannen oder zusammendrücken.

Die Veränderung des Abstandes kann in einer Variante mittels eines Pneumatik- oder Hydraulikzylinders erfolgen. In einer weiteren Variante kann der Abstand mittels eines Linearantriebs oder mittels einer elektromechanischen Vorrichtung erfolgen. Als elektromechanische Vorrichtung kann beispielsweise eine Exzenterscheibe, welche durch einen Elektromotor drehend angetrieben wird, verwendet werden. Ferner kann auch eine Abstandsverstellung mittels einer drehend angetriebenen Spindel oder über eine Kombination aus Zahnstange und Elektromotor erfolgen.

Der Stempel der mindestens einen Kammer verfügt vorzugsweise über mindestens ein zusätzliches Formelement, welches bevorzugt aus dem Stempel selektiv herausfahrbar ist, um eine Form in das mindestens eine Teigstück einzuprägen und/oder auszustanzen. Dadurch lassen sich beispielsweise Verzierungen auf das mindestens eine Teigprodukt aufbringen oder Formen aus diesem Ausstanzen, z.B. ein zentrales Loch.

Das mindestens eine zusätzliche Formelement kann als negative oder positive Prägeform auf dem Stempel ausgebildet sein, d.h. entweder als Aussparung oder als Vorsprung auf dem Stempel vorhanden sein.

Ferner kann das mindestens eine Formelement als Klinge ausgebildet sein, beispielsweise zum Einschneiden eines Musters auf dem Teigprodukt oder zum Ausstanzen einer bestimmten Form aus dem mindestens einen Teigprodukt.

Bevorzugt verfügt der Stempel über eine entsprechende Vorrichtung, um das mindestens eine Formelement selektiv aus dem Stempel ausfahren und wieder einfahren zu können. Dadurch beeinträchtigt das zusätzliche Formelement den Formgebungsprozess nicht, sondern kann erst am Schluss auf das geformte mindestens eine Teigprodukt angewendet werden.

Bevorzugt verfügt ein Stempel mit mindestens einem zusätzlichen Formelement über Stellmittel, so dass der Stempel aktiv auf das mindestens eine Teigprodukt gedrückt werden kann, um dieses zu Prägen und/oder zu Stanzen.

Bevorzugt verfügt der Stempel der mindestens einen Kammer über mindestens eine Düse, mit der Luft oder ein Prozessgas angesaugt oder ausgeblasen, ein Fluid oder Pulver auf das mindestens eine Teigstück aufgesprüht und/oder eine Füllmasse in das mindestens eine Teigstück eingespritzt werden kann.

Durch das Ansaugen von Luft kann das mindestens eine Teigstück oder mindestens eine Teigprodukt durch Erzeugen eines Unterdrucks innerhalb der mindestens einen Kammer in dieser gehalten werden, während das Werkzeug von der Unterlage oder einem Fördermittel abgehoben wird, so dass mit dem Werkzeug das mindestens eine Teigstück oder das mindestens eine Teigprodukt z.B. auf eine weitere Vorrichtung oder ein weiteres Fördermittel transferiert werden kann. Dadurch kann das Einsatzspektrum der erfindungsgemässen Vorrichtung erweitert werden. Vorzugsweise verfügt die Düse ferner über einen Saugnapf, mit welchem sich das mindestens eine Teigstück unter Anwendung eines Unterdrucks ansaugen lässt.

Durch das Ausblasen von Luft oder eines Prozessgases, insbesondere eines Schutzgases, kann ein in der mindestens einen Kammer befindliches Teigstück oder Teigprodukt schonend aktiv ausgestossen werden. Dies birgt wesentliche Vorteile beim Formen von klebrigen Teigsorten, welche an der Wandung anhaften und daher nicht unbedingt durch Einwirkung der Schwerkraft alleine aus der Kammer entfernbar sind.

Die mindestens eine Düse ist vorzugsweise als Sprühdüse ausgestaltet, mit welcher ein Fluid, z.B. eine Glasur oder Wasser, oder ein Pulver, z.B. Mehl oder Zucker auf das in der mindestens einen Kammer befindliches Teigstück oder Teigprodukt aufgesprüht werden kann. Dadurch lässt sich die erfindungsgemässe Vorrichtung nochmals flexibler in den Herstellungsprozess einbinden.

Die mindestens eine Düse kann derart ausgestaltet sein, dass mit dieser sowohl Luft oder ein Prozessgas angesaugt oder ausgeblasen sowie ein Fluid oder ein Pulver versprüht werden kann. Dadurch lässt sich die erfindungsgemässe Vorrichtung sehr flexibel einsetzen. Vorzugsweise ist die mindestens eine Düse für diese Anwendungen derart im Stempel integriert, dass diese auf der ersten Seite des Stempels, welche mit dem mindestens einen Teigstück beziehungsweise mit dem mindestens einen Teigprodukt in Berührung kommt, plan ist.

Bevorzugt kann die mindestens eine Düse auch als Einspritzdüse zum Einspritzen einer Füllmasse oder dergleichen in das mindestens eine Teigprodukt ausgestaltet sein. In diesem Fall ragt die mindestens eine Düse aus dem Stempel hervor, so dass diese in das mindestens eine Teigstück oder Teigprodukt eindringen kann, um die Füllmasse in dieses einzuspritzen. Vorzugsweise ist eine als Einspritzdüse konfigurierte Düse aus dem Stempel selektiv heraus- und einfahrbar ausgestaltet, so dass diese den Formprozess nicht stört, sondern erst nach oder kurz vor Abschluss des Formprozesses ausgefahren werden kann. Eine weitere Aufgabe der Erfindung ist es, ein Verfahren bereitzustellen, mit welchem mindestens ein Teigstück auf eine möglichst effiziente Weise zu mindestens einem Teigprodukt geformt werden kann und welches eine möglichst grosse Flexibilität bietet. Diese Aufgabe wird mit den Merkmalen des Anspruchs 10 gelöst. Das erfindungsgemässe Verfahren zum Formen mindestens eines Teigstücks zu mindestens einem Teigprodukt umfasst in einem ersten Schritt das Absenken des Werkzeugs auf mindestens ein auf der Unterlage befindliches Teigstück, so dass das mindestens eine Teigstück durch die entsprechende Öffnung in die mindestens eine Kammer aufgenommen wird. In einem zweiten Schritt wird das Werkzeug relativ zur Unterlage in mindestens einer Raumrichtung, welche parallel zu einer Auflagefläche der Unterlage steht, bewegt oder um eine Drehachse, welche Normal zur Auflagefläche der Unterlage steht, gedreht um das mindestens eine Teigstück zu formen. Dabei wird die auf das mindestens eine Teigstück ausgeübte Kraft verändert, um eine Höhen- oder Volumenänderung des mindestens einen Teigstücks zu kompensieren.

Das erfindungsgemässe Verfahren wird mit einer oben beschriebenen Vorrichtung durchgeführt. Insbesondere bevorzugt wird die auf das mindestens eine Teigstück ausgeübte Kraft verringert. Je nach Art des zu formenden mindestens einen Teigprodukts kann die Kraft jedoch auch erhöht werden. Alternativ kann die auf das mindestens eine Teigstück ausgeübte Kraft periodisch verringert und erhöht werden.

Für die Herstellung unterschiedlicher Teigprodukte können spezifische Bewegungsabläufe zum Beispiel in einer Steuerung gespeichert werden. Insbesondere lässt sich der Formprozess in mehrere Phasen einteilen, wobei in jeder Phase eine unterschiedliche Bewegung des Werkzeugs mit einer spezifischen Bewegungsgeschwindigkeit festgelegt werden kann. Innerhalb einer Phase kann die Bewegungsgeschwindigkeit auch variiert werden. Dadurch kann für jedes zu formende Teigprodukt ein optimaler Formprozess festgelegt und insbesondere in der Steuerung gespeichert werden.

Vorzugsweise ist der Formprozess in mindestens vier Phasen unterteilt, wobei in jeder Phase eine spezifische Bewegung des Werkzeugs mit einer bestimmten Geschwindigkeit oder auch mit variabler Geschwindigkeit erfolgt.

Vorzugsweise wird das Werkzeug in zwei Raumrichtungen, die parallel zur Auflagefläche der Unterlage stehen, bewegt, wobei die Bewegung insbesondere einer Bahn in der Form eines Kreises, einer Spirale, einer Ellipse, eines Polygons oder eines Dreiecks folgt. Weiter bevorzugt kann das Werkzeug auch eine oszillierende Bewegung in einer Raumrichtung ausführen. Beispielsweise kann das Werkzeug eine schlangenlinienförmige Bewegung entlang der Förderrichtung oder entgegen dieser vollführen.

Für das erfindungsgemässe Verfahren eignen sich insbesondere Vorrichtungen mit einem Gelenkarmroboter mit 4, 5 oder 6 Achsen als erstes und allenfalls zweites Antriebsmittel. Für eine kreisende Bewegung gemäss dem oben beschriebenen Verfahren kann jedoch auch ein Gelenkarmroboter mit lediglich 3 Achsen eingesetzt werden, vorausgesetzt eine der Achsen verfügt über eine exzentrische Lagerung, so dass eine rotierende Bewegung in einer Raumachse erzeugt werden kann.

Bevorzugt wird das Werkzeug in einer ersten Raumrichtung, welche Normal zur Auflagefläche der Unterlage steht, bewegt, wobei das Werkzeug zugleich in mindestens einer zweiten Raumrichtung, die parallel zur Auflagefläche der Unterlage steht, bewegt oder um eine Drehachse, die Normal zur Auflagefläche der Unterlage steht, gedreht wird.

Durch die Bewegung in einer Raumrichtung, die Normal zur Auflagefläche der Unterlage beziehungsweise zu einem darauf befindlichen Fördermittel steht, lässt sich das mindestens eine Teigstück dreidimensional formen. Die Raumrichtung, die normal zur Auflagefläche der Unterlage beziehungsweise zu einem darauf befindlichen Fördermittel steht, entspricht bei normalem Einsatz des Verfahrens in der Regel der vertikalen Raumrichtung.

Durch eine Variation der Bewegung des Werkzeugs lassen sich unterschiedliche Teigprodukte formen. Während eines Formprozesses kann das Werkzeug immer derselben Bewegung folgen oder die Bewegung kann innerhalb des Formprozesses geändert werden, je nach dem zu erzielenden Resultat.

Ein wesentlicher Vorteil des erfindungsgemässen Verfahrens liegt darin, dass sich zum Formen eines spezifischen Teigprodukts optimale Bewegungsabfolge erzielen lässt.

Das Werkzeug wird vorzugsweise während des Formens zusätzlich kontinuierlich oder nach einer vorbestimmten Zeit von der Unterlage weg angehoben. Dadurch kann der dem mindestens einen Teigstück zur Verfügung stehende Platz innerhalb der mindestens einen Kammer vergrössert werden, insbesondere zur Kompensation einer zunehmenden Höhe oder eines zunehmenden Volumens infolge des Formprozesses.

Offenbart, aber nicht Teil der Erfindung, ist die Verwendung eines Industrieroboters zum Formen mindestens eines Teigstücks zu mindestens einem Teigprodukt, zur Bearbeitung mindestens eines Teigprodukts oder mindestens einer Backware und/oder zum Bewegen mindestens eines Teigstücks, Teigprodukts oder Backware.

Als "Backware" werden in der vorliegenden Anmeldung gebackene Teigprodukte verstanden.

Der Industrieroboter verfügt vorzugsweise über ein Werkzeug oder einen Aktor, mit welchem mindestens ein Teigstück geformt, mindestens ein Teigprodukt oder eine Backware bearbeitet und/oder mindestens ein Teigstück, Teigprodukt oder Backware bewegt werden kann. Vorzugsweise verfügt der Industrieroboter über eine Kupplung, mit welcher dieser lösbar mit dem Werkzeug oder Aktor verbunden werden kann. Dadurch lässt sich der Einsatzweck des Industrieroboters schnell und einfach ändern. Industrieroboter verfügen gemeinhin über eine entsprechende Steuerungssoftware, mit welcher sich die Bewegungen und Bewegungsabläufe programmieren lassen. Vorzugsweise ist diese Steuerungssoftware mit einem Sensor, wie beispielsweise einer Kamera verbunden, so dass die Istlage, Form und/oder Ausrichtung des mindestens einen Teigstücks, Teigprodukts oder Backware erfasst werden kann. Die Steuerungssoftware erkennt die Lage und/oder Ausrichtung des mindestens einen Teigstücks, Teigprodukts oder Backwaren. Anschliessend lässt sich durch den Industrieroboter das mindestens eine Teigstück, Teigprodukt oder Backware in eine Solllage, Sollform oder Sollausrichtung bringen oder überführen. Ferner kann mittels des Sensors das Resultat des Formens, Bearbeitens oder Bewegens des mindestens einen Teigstücks, Teigprodukts oder Backware überprüft werden und gegebenenfalls eine Korrektur mittels eines erneuten Formen, Bearbeiten oder Bewegen des mindestens einen Teigstücks, Teigprodukts oder Backware durch die Steuerung veranlasst werden.

Ein weiterer Vorteil bei der Verwendung eines Industrieroboters ist, dass dieser vollautomatisch einen Werkzeugwechsel vollführen kann. Dadurch wird es möglich mit einer Vorrichtung zum Formen mindestens eines Teigstücks, bei welcher ein Gelenkarmroboter Verwendung findet, relativ schnell, einfach und vollautomatisch den Arbeitsschritt, den der Gelenkarmroboter ausführt, zu wechseln.

Vorzugsweise wird mit dem Gelenkarmroboter das mindestens eine Teigstück geschnitten, gestanzt, geknetet, gewickelt, geschlungen, gewalzt, verdreht, gewirkt und/oder mit einer Füllmasse befüllt.

Zum Schneiden oder Stanzen wird der Gelenkarmroboter vorzugsweise mit mindestens einer Klinge oder wenigstens einer Stanzform ausgerüstet. Alternativ kann der Gelenkarmroboter auch mit einer drehend angetriebenen Schneidewelle ausgerüstet sein, um auf einem Fördermittel einen kontinuierlichen Schneide- oder Stanzprozess durchzuführen. Dadurch kann ein Teigband in eine Vielzahl von einzelnen Teigstücken mit einer vordefinierten Form aufgeteilt werden. Alternativ lässt sich beim mindestens einen Teigstück eine Verzierung auf eine Oberfläche einstanzen oder einprägen.

Durch das Anbringen eines Greifers mit zwei oder mehr Fingern am Gelenkarmroboter kann mittels der Finger das mindestens eine Teigstück geknetet oder in eine Form, beispielsweise einen Pizzaboden, gezogen werden. Alternativ kann eine drehbare Walze am Gelenkarmroboter angebracht werden, mit welcher das mindestens eine Teigstück auf der gesamten Fläche oder mindestens in einem Bereich in eine vorbestimmte Form gewalzt werden kann.

Durch Ausrüsten des Gelenkarmroboters mit einem Greifer kann ferner das mindestens eine Teigstück umgeschlagen oder geschlungen werden, zum Beispiel zu einem Bretzel. Ferner lassen sich mehrere Teigstücke oder ein langes Teigstück flechten oder verdrehen.

Mit einem weiter oben beschriebenen Werkzeug lassen sich diverse Brotformen mit einem Gelenkarmroboter wirken.

Durch Anbringen einer Spritzdüse am Gelenkroboterarm lässt sich ferner mindestens ein mit einer Füllmasse gefülltes Teigprodukt herstellen.

Mit dem Gelenkarmroboter werden bevorzugt weitere Zutaten auf das mindestens eine Teigprodukt gelegt, gestreut, verteilt und/oder ein Pulver oder Fluid auf dieses gesprüht.

Durch Anbringen eines Greifers am Gelenkarmroboter lassen sich Zutaten auf das mindestens eine Teigstück oder Teigprodukt legen, beispielsweise Schokolade- oder Fruchtstücke bei der Herstellung von Backwaren oder Torten sowie diverse Beläge bei der Pizzaherstellung.

Durch Anbringen einer Streuvorrichtung am Gelenkarmroboter lassen sich diverse Verzierungen, wie zum Beispiel Streusel und Puderzucker, Mehl, Zucker aber auch andere flockige oder pulverförmige Zutaten, wie zum Beispiel geriebener Käse auf das mindestens eine Teigstück oder Teigprodukt streuen.

Mittels einer Düse, die am Gelenkarmroboter angebracht ist, kann das mindestens eine Teigstück benetzt oder das mindestens eine Teigprodukt mit einer Flüssigkeit, zum Beispiel mit einem Guss überzogen werden.

Vorzugsweise wird mit dem Gelenkarmroboter das mindestens eine Teigstück, Teigprodukt oder die mindestens eine Backware versetzt, angeordnet, gewendet, aussortiert, verpackt und/oder in Behälter eingefüllt.

Dadurch lassen sich gezielt einzelne Teigstücke, Teigprodukte oder Backwaren in eine andere Lage bringen oder auf eine Fördervorrichtung, ein Backblech oder in einen Behälter transferieren. Ferner können beschädigte oder verbrannte Teigprodukte oder Backwaren aussortiert werden. Ferner lassen sich Teigstücke, Teigprodukte oder Backwaren gezielt drehen, beispielsweise um in einem nachfolgenden Bearbeitungsschritt auf einer anderen Seite bearbeitet zu werden. Auch das Verpacken oder Einfüllen von Teigprodukten oder Backwaren in Verpackungen oder Behälter wird durch die Verwendung eines Gelenkarmroboters vereinfacht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
Fig. 1: eine perspektivische Ansicht einer erfindungsgemässen Vorrichtung mit Gelenkarmroboter;
Fig. 2: eine Ansicht der erfindungsgemässen Vorrichtung gemäss der Fig. 1 von oben;
Fig. 3: in Schnittbild durch eine Ausführungsform eines Werkzeugs einer erfindungsgemässen Vorrichtung;
Fig. 4 ein vergrössertes Schnittbild einer Kammer des Werkzeugs aus der Figur 2 ;
Figs. 5a, 5b: ein vergrössertes Schnittbild einer Kammer mit einem Stempel mit zusätzlichen Formelementen;
Fig. 6: eine perspektivische Ansicht einer erfindungsgemässen Vorrichtung mit Delta-Roboter;
Fig. 7: eine Seitenansicht der Vorrichtung gemäss der Figur 1 ;
Fig. 8: ein schematischer Querschnitt einer Unterlage mit Förderband.

Grundsätzlich sind in den Figuren gleiche Teile mit gleichen Bezugszeichen versehen.

### Wege zur Ausführung der Erfindung

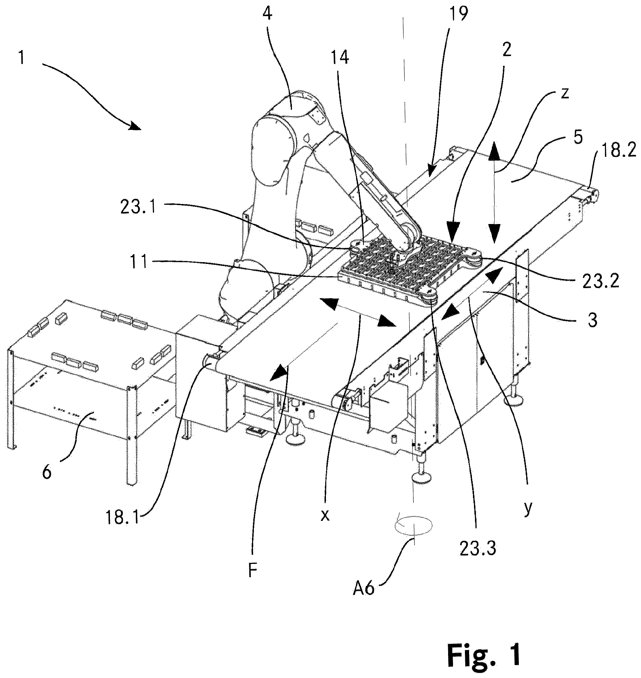

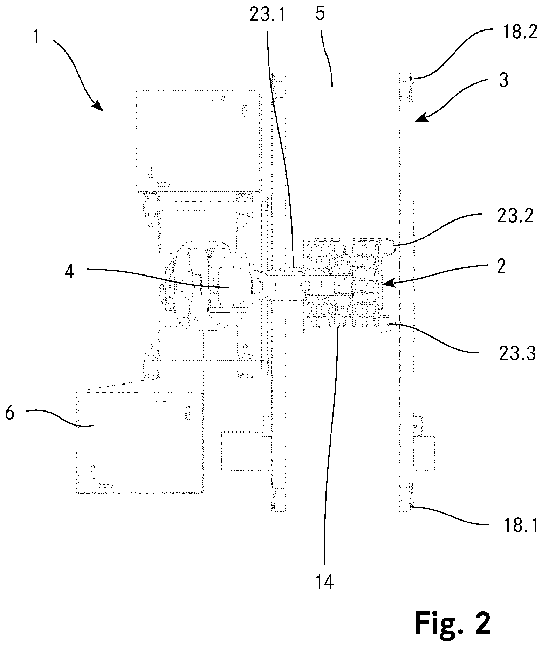

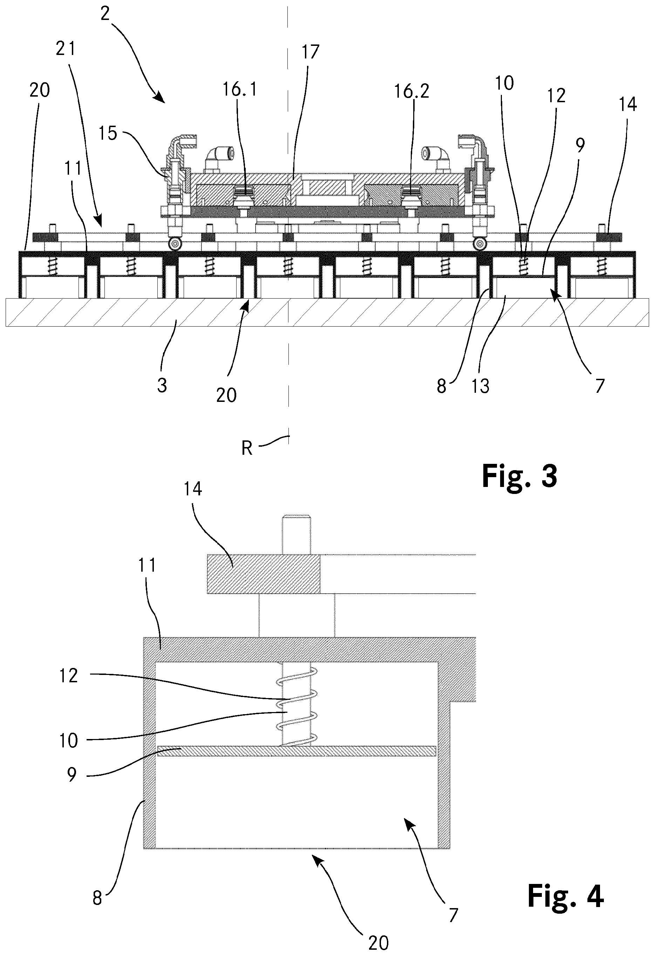

Die **Fig. 1** zeigt eine perspektivische Ansicht einer erfindungsgemässen Vorrichtung 1. Die **Fig. 2** zeigt die Vorrichtung 1 gemäss der Fig. 1 von oben. Die Vorrichtung 1 umfasst ein Werkzeug 2, welches im Zusammenhang mit der **Fig. 3** im Detail beschrieben wird. Das Werkzeug 2 umfasst einen Grundkörper 11, welcher über mindestens eine Kammer verfügt, in welcher das mindestens eine Teigstück aufgenommen werden kann. Zudem ist auf dem Grundkörper 11 eine Halterungsplatte 14 angeordnet, deren Abstand zum Grundkörper 11 mittels Pneumatikzylinder 23.1, 23.2, 23.3 veränderbar ist. Dadurch kann ein in der mindestens einen Kammer befindlicher Stempel, der mit der Halterungsplatte 14 wirkverbunden ist, linear innerhalb der mindestens einen Kammer bewegt werden. Auf der **Fig. 2** ist erkennbar, dass die Halterungsplatte 14 eine Mehrzahl an Aussparungen aufweist. Diese Aussparungen dienen dazu, das Gewicht der Halterungsplatte 14 zu verringern.

Ferner verfügt die Vorrichtung 1 über eine Unterlage 3, welche bei der gezeigten Ausführungsform als steifer Tisch ausgestaltet ist. Die Vorrichtung verfügt ferner über einen Industrieroboter, der in der gezeigten Ausführungsform als Gelenkarmroboter 4 ausgeführt ist, welcher die Funktion der ersten Antriebsmittel und der zweiten Antriebsmittel übernimmt. Mit dem Gelenkarmroboter 4 kann das Werkzeug 2 in drei Raumrichtungen x, y, z bewegt werden. Ferner lässt sich das Werkzeug 2 durch den Gelenkarmroboter 4 auf eine Werkzeugablage 6 ablegen beziehungsweise von dieser abheben. Dadurch kann das Werkzeug 2 gegen ein anderes Werkzeug ausgetauscht werden, beispielsweise um grössere oder kleinere Teigstücke zu formen. Dadurch kann je nach Grösse des mindestens einen Teigstücks sowie des zu formenden mindestens einen Teigprodukts ein passendes Werkzeug 2 eingesetzt werden. Bei der gezeigten Ausführungsform verfügt der Gelenkarmroboter 4 über sechs Achsen. Ein Gelenkarmroboter 4 mit sechs Achsen erlaubt eine grösstmögliche Flexibilität beim Bewegen des Werkzeugs 2. Ein derartiger Gelenkarmroboter 4 verfügt über drei Hauptachsen, mit denen das Werkzeug 2 frei im Raum positionierbar ist und entlang der drei Raumrichtungen x, y, z bewegt werden kann, sowie über drei Handachsen, mit denen die Ausrichtung des Werkzeugs 2 relativ zur Unterlage 3 eingestellt werden kann. Dabei kann das Werkzeug 2 zum Beispiel um eine sechste Achse A6 des Gelenkarmroboters 4, welche eine Handachse ist, gedreht werden.

Auf der Unterlage 3 ist ein Fördermittel 5 in der Form eines Förderbandes angeordnet. Mit dem Fördermittel 5 lassen sich Teigstücke beziehungsweise Teigprodukte in eine Förderrichtung F bewegen. Das Förderband ist bei der gezeigten Ausführungsform über zwei Umlenkrollen 18.1, 18.2 gespannt, welche mit dem als Unterlage 3 dienenden Tisch verbunden sind. In Förderrichtung F vor sowie hinter der Vorrichtung 1 sind weitere Komponenten angeordnet, um das mindestens eine Teigstück aus einem Teig oder Teigband herzustellen, beziehungsweise das mindestens eine Teigprodukt weiter zu verarbeiten. Das Fördermittel 5 ist unmittelbar auf einer Auflagefläche 19 der Unterlage 3 angeordnet. Dadurch bietet das Fördermittel 5 genauso wie die Unterlage 3 eine steife Fläche, auf welcher das mindestens eine Teigstück zum mindestens einen Teigprodukt geformt wird.

Über eine Kombination von Bewegungen des Werkzeugs 2 relativ zur Unterlage 3 beziehungsweise zum Fördermittel 5 in mindestens eine der parallel zu einer Auflagefläche 19 angeordneten Raumrichtungen x, y kann das mindestens eine Teigstück zum mindestens einen Teigprodukt geformt werden. Durch eine Bewegung des Werkzeugs 2 entlang der Raumrichtung y, welche parallel zur Förderrichtung F steht in eben diese Förderrichtung F können ohne Unterbrechung der Bewegung des Fördermittels 5 das mindestens eine Teigstück zum mindestens einen Teigprodukt geformt werden. Ferner kann über eine Drehung um die sechste Achse A6 des Gelenkarmroboters 4 eine zusätzliche Bewegung des Werkzeugs 2 relativ zur Unterlage 3 beziehungsweise relativ zum Fördermittel 5 erzeugt werden.

Die **Fig. 3** zeigt ein Schnittbild durch eine Ausführungsform eines Werkzeugs 2 einer erfindungsgemässen Vorrichtung 1. Das Werkzeug 2 verfügt über einen Grundkörper 11, welcher über eine Mehrzahl an Kammern 7 verfügt. Eine Kammer 7 ist in Vergrösserung in der **Fig. 4** wiedergegeben. Jede der Kammern 7 verfügt über eine umlaufende Wandung 8. Auf einer ersten Seite 20 des Werkzeugs sind die Kammern 7 offen, damit auf der Unterlage 3 befindliche Teigstücke 13 in die Kammern 7 aufgenommen werden können. In jeder Kammer 7 ist ein Stempel 9 angeordnet. Jeder Stempel 9 ist in einer im Wesentlichen im rechten Winkel zum Grundkörper 11 stehenden Achse R linear beweglich gelagert. Bei der gezeigten Ausführungsform verfügen die Stempel 9 über Führungsstangen 10, welche im Grundkörper 11 beweglich gelagert sind. Um jede Führungsstange 10 ist eine Feder 12 als Vorspannelement angeordnet. Über die Feder 12 wird jeder Stempel 9 mit einer bestimmten Kraft gegen das in der jeweiligen Kammer 7 befindliche Teigstück 13 gedrückt. Dadurch kann gewährleistet werden, dass die Teigstücke 13 während des gesamten Prozesses auf die Unterlage 3 gedrückt werden. Dadurch können die Teigstücke durch eine Bewegung des Werkzeugs 2 relativ zur Unterlage 3 geformt werden, beispielsweise zu runden Brötchen. Die Federn stützen sich auf einer Halterungsplatte 14 ab, welche sich in einem Abstand zum Grundkörper 11 befindet. Über die Pneumatikzylinder 23.1, 23.2, 23.3 lässt sich der Abstand zwischen der Halterungsplatte 14 und dem Grundkörper 11 verändern. Dadurch kann gleichzeitig die durch die Stempel 9 auf die Teigstücke 13 ausgeübte Kraft variiert werden. Alternativ können die Pneumatikzylinder 23.1, 23.2, 23.3 auch durch andere geeignete Stellmittel ersetzt werden, beispielsweise durch elektromechanische Stellmittel. Auf einer der ersten Seite 20 gegenüberliegenden zweiten Seite 21 verfügt das Werkzeug über Kopplungszapfen 16.1, 16.2, mit denen das Werkzeug an den ersten Antriebsmitteln und allfällig vorhandenen zweiten Antriebsmitteln, wie beispielsweise den Gelenkarmroboter 4 der Vorrichtung gemäss **Fig. 1**, lösbar befestigt werden kann. Über Pneumatikkopplungen 15 lassen sich die Pneumatikzylinder 23.1, 23.2, 23.3 mit einer Pneumatikeinheit der Vorrichtung 1 (nicht gezeigt) lösbar verbinden.

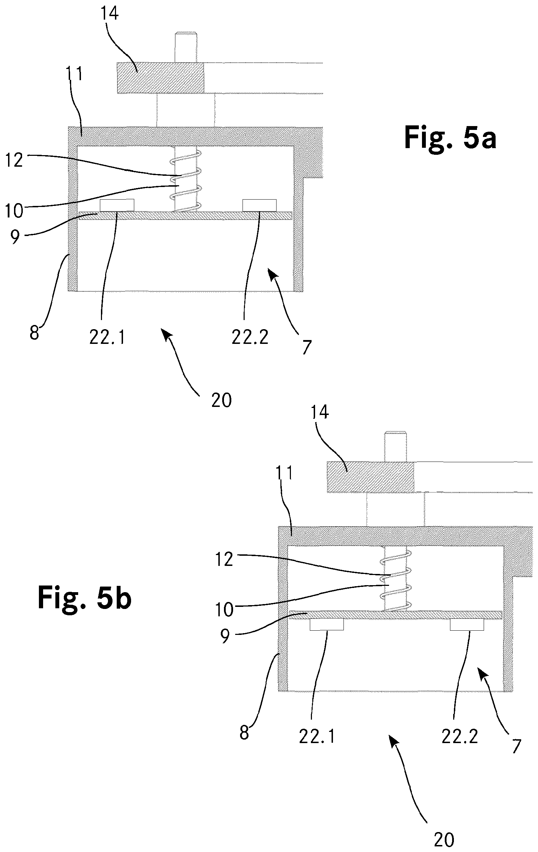

Die **Fig. 5a** zeigt ein vergrössertes Schnittbild einer Kammer 7 des Werkzeugs 2, bei welcher der Stempel 9 über zwei zusätzliche Formelemente 22.1, 22.2 verfügt, wobei die zusätzlichen Formelemente 22.1, 22.2 in einer eingefahrenen Position gezeigt sind. In dieser Position hindern die zusätzlichen Formelemente 22.1, 22.2 den Formprozess nicht, da diese nicht aus dem Stempel 9 herausragen. Die **Fig. 5b** zeigt die Kammer 7 bei welcher die zusätzlichen Formelemente 22.1, 22.2 in einer ausgefahrenen Position sind, das heisst, dass die zusätzlichen Formelemente 22.1, 22.2 aus dem Stempel herausragen, so dass diese in eine Oberfläche eines in der Kammer 7 befindlichen Teigstücks oder eines Teigprodukts (nicht gezeigt) eine Form einprägen können. In der gezeigten Ausführungsform sind die zusätzlichen Formelemente 22.1, 22.2 als positive Prägestempel ausgebildet. Um das Ausfahren und Einfahren der zusätzlichen Formelemente 22.1, 22.2 zu ermöglichen, verfügt das Werkzeug 2 oder die Kammer 7 über entsprechende Aktuatoren (nicht gezeigt), zum Beispiel elektromechanischer Art.

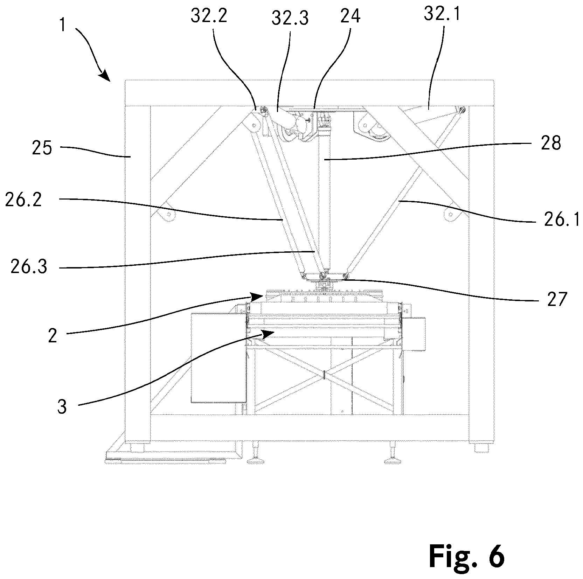

Die **Fig. 6** zeigt eine Ausführungsform der erfindungsgemässen Vorrichtung 1 mit einem Delta-Roboter 24, der anstelle des Gelenkarmroboters 4 gemäss **Fig. 1** eingesetzt wird. Der Delta-Roboter 24 ist an einem Gestell 25 befestigt, so dass dieser oberhalb der Unterlage 3, welche wiederum als steifer Tisch ausgestaltet ist, angeordnet ist. Mittels dreier Aktoren 32.1, 32.2, 32.3 lässt sich eine Plattform 27, an welcher das Werkzeug 2 lösbar befestigt ist, mit drei Freiheitsgraden bewegen. Die Aktoren 32.1, 32.2, 32.3 sind über drei Stangen 26.1, 26.2, 26.3 mit der Plattform 27 verbunden. Zusätzlich verfügt der Delta-Roboter in der dargestellten Ausführungsform über einen Drehachsenantrieb 28, mit welchem sich die Plattform 27 und somit auch das Werkzeug 2 zusätzlich um eine vertikale Drehachse drehen lässt.

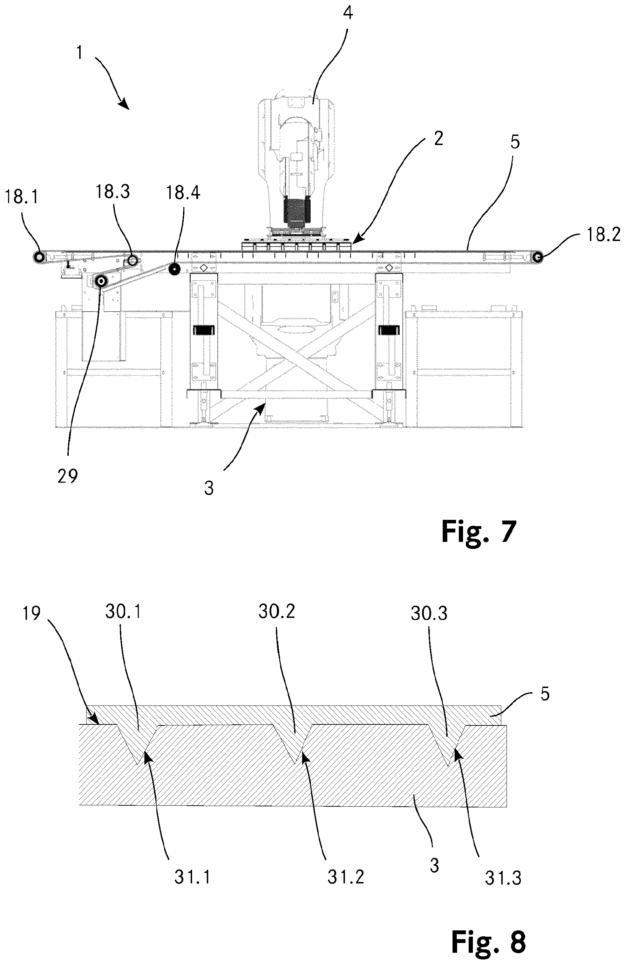

Die **Fig. 7** zeigt eine Seitenansicht der Vorrichtung gemäss **Fig. 1**. Das Förderband 5 wird über eine erste Umlenkrolle 18.1 und über eine zweite Umlenkrolle 18.2 auf eine Unterseite der Auflagefläche 19 umgelenkt. Auf dieser Unterseite wird das Förderband im Bereich einer ersten Kante der Unterlage 3, welche als starrer Tisch ausgestaltet ist, über eine dritte Umlenkrolle 18.3 erneut umgelenkt und zu einer Antriebsrolle 29 geführt. An der Antriebsrolle 29 wird das Förderband zu einer vierten Umlenkrolle 18.4 geführt, über welche das Förderband 5 im Wesentlichen parallel zur Auflagefläche 19 zur zweiten Umlenkrolle geführt wird. Im gezeigten Beispiel beträgt der Winkel, um welchen das Förderband 5 an der ersten Umlenkrolle 18.1, der zweiten Umlenkrolle 18.2 sowie der dritten Umlenkrolle 18.3 umgelenkt wird, jeweils zwischen 160° und 200°. Durch die mehrfache Umlenkung des Förderbandes kann eine Schlupfwirkung, die durch die Bewegung des Werkzeugs 2 relativ zum Förderband 5 entsteht, zwischen Förderband 5 und Antriebsrolle 29 grösstenteils verhindert werden.

Die **Fig. 8** stellt einen schematischen Querschnitt durch ein erfindungsgemässes Förderband 5 dar, welches auf einer Unterlage 3 angeordnet ist. Das Förderband 5 läuft auf der Auflagefläche 19 der Unterlage 3. Um ein seitliches Verrutschen des Förderbandes zu verhindern, weist dieses auf einer Unterseite Führungskeile 30.1, 30.2, 30.3 auf, welche in entsprechenden Nuten 31.1, 31.2, 3.1.3, die in der Auflagefläche 19 eingebracht sind, laufen. Je nach Breite des Förderbandes, der erwarteten seitlich wirkenden Kraft können die Anzahl, Tiefe sowie Breite der Führungskeile 30.1, 30.2, 30.3 sowie dementsprechend auch der Nuten 31.1, 31.2, 31.3 variiert werden.

## Patentansprüche

1. Vorrichtung (1) zum Formen mindestens eines Teigstücks (13) zu mindestens einem Teigprodukt, umfassend eine Unterlage (3) zur Aufnahme des mindestens einen Teigstücks (13), ein Werkzeug (2) mit mindestens einer Kammer (7) mit einer umlaufenden Wandung (8), wobei die Wandung (8) auf einer ersten Seite des Werkzeugs (2), welche in Richtung der Unterlage (3) gerichtet ist, eine Öffnung zur Aufnahme eines Teigstücks (13) in die mindestens eine Kammer (7) definiert, sowie erste Antriebsmittel, mit denen das Werkzeug (2) in mindestens zwei Raumrichtungen oder in eine Raumrichtung sowie um eine Drehachse bewegt wird, so dass das mindestens eine Teigstück (13) durch Bewegungen oder durch Drehung des Werkzeugs (2) relativ zur Unterlage zum mindestens einen Teigprodukt geformt wird, wobei innerhalb der mindestens einen Kammer (7) ein Stempel (9) angeordnet ist, welcher über Vorspannmittel und Stellmittel verfügt, um eine definierte Kraft auf ein in der Kammer (7) aufgenommenes Teigstück (13) auszuüben, wobei der Stempel (9) der mindestens einen Kammer (7) über ein Federelement (12), welches eine Vorspannkraft auf den Stempel (9) ausübt, verfügt, wobei mit den Stellmitteln die Vorspannkraft des Federelements (12) auf den Stempel (9) veränderbar ist, **dadurch gekennzeichnet, dass** die Stellmittel als Pneumatikzylinder, Hydraulikzylinder oder Linearmotor ausgestaltet sind und durch die Stellmittel eine Anschlagsfläche des Federelements (12) verstellt wird, wodurch dieses bei gleichbleibender Position des Stempels zusammengedrückt oder entspannt wird.

2. Vorrichtung gemäss Anspruch 1, **dadurch gekennzeichnet, dass** die ersten Antriebsmittel ein Absenken und Abheben des Werkzeugs (2) von der Unterlage (3) sowie eine Bewegung des Werkzeugs (2) in mindestens eine Raumrichtung, welche parallel zu einer Auflagefläche der Unterlage (3) liegt, ermöglichen..

3. Vorrichtung gemäss einem der Ansprüche 1 oder 2, **dadurch gekennzeichnet, dass** auf der Unterlage (3) ein Förderband angeordnet ist, auf denen das mindestens eine Teigstück (13) in eine Förderrichtung bewegt wird, wobei die Vorrichtung (1) über zweite Antriebsmittel verfügt, mit denen das Werkzeug (2) in Förderrichtung und entgegen der Förderrichtung bewegt wird.

4. Vorrichtung gemäss Anspruch 3, **dadurch gekennzeichnet, dass** das Förderband auf einer Unterseite über mindestens eine Führungsleiste oder über mindestens einen Führungskeil verfügt, welche(r) in mindestens einer Nut läuft, die in einer Auflagefläche der Unterlage (3) eingebracht ist.

5. Vorrichtung gemäss einem der Ansprüche 1 bis 4, **dadurch gekennzeichnet, dass** die ersten Antriebsmittel und/oder die zweiten Antriebsmittel als Industrieroboter ausgeführt sind.

6. Vorrichtung gemäss einem der Ansprüche 1 bis 5, **dadurch gekennzeichnet, dass** die Vorrichtung (1) eine Steuerung aufweist, mit welcher die durch den Stempel (9) auf ein in der mindestens einen Kammer (7) aufgenommenes Teigstück (13) ausgeübte Kraft durch Ansteuerung der Stellmittel veränderbar ist.

7. Vorrichtung gemäss einem der Ansprüche 1 bis 5, **dadurch gekennzeichnet, dass** die Vorrichtung (1) über mindestens einen Regelkreis verfügt, mit welchem mittels des Stempels (9) auf ein in der mindestens einen Kammer (7) aufgenommenes Teigstück (13) durch Ansteuerung der Stellmittel eine konstante, vorgegebene Kraft ausgeübt werden kann.

8. Vorrichtung gemäss einem der Ansprüche 1 bis 7, **dadurch gekennzeichnet, dass** der Stempel (9) der mindestens einen Kammer (7) über mindestens ein zusätzliches Formelement (22.1, 22.2) verfügt, welches vorzugsweise aus dem Stempel (9) selektiv herausfahrbar ist, um eine Form in das Teigstück (13) einzuprägen und/oder auszustanzen.

9. Vorrichtung gemäss einem der Ansprüche 1 bis 8, **dadurch gekennzeichnet, dass** der Stempel (9) der mindestens einen Kammer (7) über mindestens eine Düse verfügt, mit der Luft oder ein Prozessgas angesaugt oder ausgeblasen, ein Fluid oder Pulver auf das mindestens eine Teigstück (13) aufgesprüht und/oder eine Füllmasse in das mindestens eine Teigstück (13) eingespritzt werden kann.

10. Verfahren zum Formen mindestens eines Teigstücks (13) zu mindestens einem Teigprodukt mit einer Vorrichtung (1) gemäss einem der Ansprüche 1 bis 9, umfassend die Schritte:
a) Absenken des Werkzeugs (2) auf mindestens ein auf der Unterlage (3) befindliches Teigstück (13), so dass das mindestens eine Teigstück (13) durch die entsprechende Öffnung in die mindestens eine Kammer (7) aufgenommen wird;
b) Bewegen des Werkzeugs (2) relativ zur Unterlage (3) in mindestens einer Raumrichtung, welche parallel zu einer Auflagefläche der Unterlage (3) steht, oder Drehung des Werkzeugs relativ zur Unterlage (3) um eine Drehachse, welche normal zur Auflagefläche der Unterlage (3) steht, um das mindestens eine Teigstück (13) zu formen;
c) Verändern, insbesondere Verringern der durch den Stempel (9) auf das mindestens eine Teigstück (13) ausgeübten Kraft, um eine Höhen- oder Volumenänderung des Teigstücks (13) zu kompensieren.

11. Verfahren gemäss Anspruch 10, **dadurch gekennzeichnet, dass** das Werkzeug (2) in zwei Raumrichtungen, die parallel zur Auflagefläche der Unterlage (3) stehen, bewegt wird, wobei die Bewegung insbesondere einer Bahn in der Form eines Kreises, einer Spirale, einer Ellipse, eines Polygons oder eines Dreiecks folgt.

12. Verfahren gemäss Anspruch 10, **dadurch gekennzeichnet, dass** das Werkzeug (2) in einer ersten Raumrichtung, welche Normal zur Auflagefläche der Unterlage (3) steht, bewegt wird, wobei das Werkzeug (2) zugleich in mindestens einer zweiten Raumrichtung, die parallel zur Auflagefläche der Unterlage (3) steht, bewegt oder um eine Drehachse, die Normal zur Auflagefläche der Unterlage (3) steht, gedreht wird.

13. Verfahren gemäss einem der Ansprüche 10 bis 12, **dadurch gekennzeichnet, dass** das Werkzeug (2) während des Formens zusätzlich kontinuierlich oder nach einer vorbestimmten Zeit von der Unterlage (3) weg angehoben wird.

## Claims

1. Device (1) for shaping at least one piece of dough (13) into at least one dough product, comprising a base (3) for receiving the at least one piece of dough (13), a mould (2) having at least one chamber (7) with an encircling wall (8), wherein the wall (8) on a first side of the mould (2), which side is directed towards the base (3), defines an opening for receiving a piece of dough (13) in the at least one chamber (7), and first drive means with which the mould (2) is moved in at least two directions in space or in one direction in space and about an axis of rotation such that the at least one piece of dough (13) is formed into the at least one dough product by movements or by rotation of the mould (2) relative to the base, wherein a punch (9) is arranged within the at least one chamber (7), the punch having pretensioning means and actuating means in order to exert a defined force on a piece of dough (13) received in the chamber (7), wherein the punch (9) of the at least one chamber (7) has a spring element (12), which exerts a pretensioning force on the punch (9), wherein the pretensioning force of the spring element (12) on the punch (9) can be changed with the actuating means, **characterized in that** the actuating means are configured as a pneumatic cylinder, hydraulic cylinder or linear motor and the actuating means adjust a stop surface of the spring element (12), as a result of which the latter is compressed or relaxed while the position of the punch remains the same.

2. Device according to Claim 1, **characterized in that** the first drive means permit a lowering and lifting off of the mould (2) from the base (3) and a movement of the mould (2) in at least one direction in space lying parallel to a supporting surface of the base (3) .

3. Device according to either of Claims 1 and 2, **characterized in that** a conveyor belt on which the at least one piece of dough (13) is moved in a conveying direction is arranged on the base (3), wherein the device (1) has second drive means with which the mould (2) is moved in the conveying direction and counter to the conveying direction.

4. Device according to Claim 3, **characterized in that** a lower side of the conveyor belt has at least one guide strip or at least one guide wedge, which guide strip or guide wedge runs in at least one groove which has been introduced into a supporting surface of the base (3).

5. Device according to one of Claims 1 to 4, **characterized in that** the first drive means and/or the second drive means are designed as industrial robots.

6. Device according to one of Claims 1 to 5, **characterized in that** the device (1) has a controller with which the force exerted by the punch (9) on a piece of dough (13) received in the at least one chamber (7) can be changed by activation of the actuating means.

7. Device according to one of Claims 1 to 5, **characterized in that** the device (1) has at least one regulating circuit with which a constant, predetermined force can be exerted by means of the punch (9) on a piece of dough (13) received in the at least one chamber (7), by activation of the actuating means.

8. Device according to one of Claims 1 to 7, **characterized in that** the punch (9) of the at least one chamber (7) has at least one additional shaping element (22.1, 22.2) which is preferably extendable selectively out of the punch (9) in order to imprint and/or punch out a shape into the piece of dough (13) .

9. Device according to one of Claims 1 to 8, **characterized in that** the punch (9) of the at least one chamber (7) has at least one nozzle with which air or a process gas can be sucked in or blown out, a fluid or powder can be sprayed onto the at least one piece of dough (13) and/or a filling can be injected into the at least one piece of dough (13).

10. Method for shaping at least one piece of dough (13) into at least one dough product with a device (1) according to one of Claims 1 to 9, comprising the steps of:
a) lowering the mould (2) onto at least one piece of dough (13) located on the base (3) such that the at least one piece of dough (13) is received through the corresponding opening into the at least one chamber (7);
b) moving the mould (2) relative to the base (3) in at least one direction in space which is parallel to a supporting surface of the base (3), or rotating the mould relative to the base (3) about an axis of rotation which is perpendicular to the supporting surface of the base (3) in order to shape the at least one piece of dough (13);
c) changing, in particular reducing, the force exerted by the punch (9) on the at least one piece of dough (13) in order to compensate for a change in height or volume of the piece of dough (13) .

11. Method according to Claim 10, **characterized in that** the mould (2) is moved in two directions in space which are parallel to the supporting surface of the base (3), wherein the movement in particular follows a path in the form of a circle, a spiral, an ellipse, a polygon or a triangle.

12. Method according to Claim 10, **characterized in that** the mould (2) is moved in a first direction in space which is perpendicular to the supporting surface of the base (3), wherein the mould (2) is at the same time moved in at least one second direction in space which is parallel to the supporting surface of the base (3), or is rotated about an axis of rotation which is perpendicular to the supporting surface of the base (3).

13. Method according to one of Claims 10 to 12, **characterized in that** the mould (2) is additionally lifted off from the base (3) continuously or after a predetermined time during the shaping.

## Revendications

1. Dispositif (1) destiné à transformer au moins un pâton (13) en au moins un produit de pâte, comprenant une cale (3) pour recevoir l'au moins un pâton (13), un outil (2) avec au moins un caisson (7) avec une paroi (8) périphérique, la paroi (8) définissant, sur un premier côté de l'outil (2) orienté en direction de la cale (3), une ouverture pour recevoir un pâton (13) dans l'au moins un caisson (7), ainsi que des premiers moyens d'entraînement avec lesquels l'outil (2) est déplacé dans au moins deux directions dans l'espace ou dans une direction dans l'espace ainsi qu'autour d'un axe de rotation, de sorte que l'au moins un pâton (13) soit transformé en au moins un produit de pâte par des mouvements ou par rotation de l'outil (2) par rapport à la cale, un tampon (9) étant disposé à l'intérieur de l'au moins un caisson (7), ledit tampon disposant de moyens de précontrainte et de moyens de réglage destinés à exercer une force définie sur un pâton (13) logé dans le caisson (7), le tampon (9) de l'au moins un caisson (7) disposant d'un élément de ressort (12) exerçant une force de précontrainte sur le tampon (9), la force de précontrainte de l'élément de ressort (12) pouvant varier sur le tampon (9) grâce aux moyens de réglage, **caractérisé en ce que** les moyens de réglage sont réalisés sous la forme d'un vérin pneumatique, d'un vérin hydraulique ou d'un moteur linéaire, et les moyens de réglage permettent de déplacer une surface de butée de l'élément de ressort (12), ce qui a pour effet de le comprimer ou de le détendre tout en conservant la même position du tampon.

2. Dispositif selon la revendication 1, **caractérisé en ce que** les premiers moyens d'entraînement permettent un abaissement et un soulèvement de l'outil (2) depuis la cale (3) ainsi qu'un mouvement de l'outil (2) dans au moins une direction dans l'espace s'étendant parallèlement à une surface portante de la cale (3).

3. Dispositif selon l'une quelconque des revendications 1 ou 2, **caractérisé en ce qu'**un tapis de transport sur lequel l'au moins un pâton (13) est déplacé dans une direction de transport est disposé sur la cale (3), le dispositif (1) disposant de deuxièmes moyens d'entraînement à l'aide desquels l'outil (2) est déplacé dans la direction de transport et à l'encontre de la direction de transport.

4. Dispositif selon la revendication 3, **caractérisé en ce que** le tapis de transport dispose, sur un côté inférieur, d'au moins une baguette de guidage ou d'au moins une clavette de guidage évoluant dans au moins une rainure amenée dans une surface portante de la cale (3).

5. Dispositif selon l'une quelconque des revendications 1 à 4, **caractérisé en ce que** le premier moyen d'entraînement et/ou le deuxième moyen d'entraînement est réalisé sous la forme d'un robot industriel.

6. Dispositif selon l'une quelconque des revendications 1 à 5, **caractérisé en ce que** le dispositif (1) comporte une commande avec laquelle la force exercée par le tampon (9) sur un pâton (13) logé dans l'au moins un caisson (7) peut varier en commandant le moyen de réglage.

7. Dispositif selon l'une quelconque des revendications 1 à 5, **caractérisé en ce que** le dispositif (1) dispose d'au moins un circuit de réglage à l'aide duquel une force constante prédéfinie peut s'exercer, à l'aide du tampon (9), sur un pâton (13) logé dans l'au moins un caisson (7), en commandant le moyen de réglage.

8. Dispositif selon l'une quelconque des revendications 1 à 7, **caractérisé en ce que** le tampon (9) de l'au moins un caisson (7) dispose d'au moins un élément de forme (22.1, 22.2) supplémentaire pouvant de préférence être déployé hors du tampon (9) de façon sélective, pour ajourer et/ou découper la forme dans le pâton (13).

9. Dispositif selon l'une quelconque des revendications 1 à 8, **caractérisé en ce que** le tampon (9) de l'au moins un caisson (7) dispose d'au moins une buse avec laquelle de l'air ou un gaz de traitement peut être aspiré ou évacué, un fluide ou une poudre peut être pulvérisé sur l'au moins un pâton (13) et/ou une masse de remplissage peut être injectée dans l'au moins un pâton (13).

10. Procédé destiné à transformer au moins un pâton (13) en au moins un produit de pâte à l'aide d'un dispositif (1) selon l'une quelconque des revendications 1 à 9, comprenant les étapes suivantes :
a) abaissement de l'outil (2) sur au moins un pâton (13) se trouvant sur la cale (3), de sorte que l'au moins un pâton (13) soit logé dans l'au moins un caisson (7) à travers l'ouverture correspondante ;
b) déplacement de l'outil (2) par rapport à la cale (3) dans au moins une direction dans l'espace s'étendant parallèlement à une surface portante de la cale (3) ou rotation de l'outil par rapport à la cale (3) autour d'un axe de rotation s'étendant perpendiculairement à la surface portante de la cale (3), pour former l'au moins un pâton (13) ;
c) modification, notamment réduction, à l'aide du tampon (9), de la force exercée sur l'au moins un pâton (13), pour compenser une variation de hauteur ou de volume du pâton (13).

11. Procédé selon la revendication 10, **caractérisé en ce que** l'outil (2) est déplacé dans deux directions dans l'espace s'étendant parallèlement à la surface portante de la cale (3), le mouvement suivant notamment une trajectoire sous la forme d'un cercle, d'une spirale, d'une ellipse, d'un polygone ou d'un triangle.

12. Procédé selon la revendication 10, **caractérisé en ce que** l'outil (2) est déplacé dans une première direction dans l'espace s'étendant perpendiculairement à la surface portante de la cale (3), l'outil (2) étant tourné simultanément dans au moins une deuxième direction dans l'espace s'étendant parallèlement à la surface portante de la cale (3), ou tournant autour d'un axe de rotation perpendiculaire à la surface portante de la cale (3) .

13. Procédé selon l'une quelconque des revendications 10 à 12, **caractérisé en ce que** l'outil (2) est retiré de la cale (3) pendant la formation soit en sus en continu soit après un temps prédéfini.
